# EUROPEAN PATENT APPLICATION

(11) **EP 1 126 373 A2**
(43) Date of publication of application: **22.08.2001**
(21) Application number: 01301262.0
(22) Date of filing: 14.02.2001
(51) Int. Cl.: G06F 12/02

(54) **Storage allocation system and method**

(30) Priority: 15.02.2000 US 504064; 15.02.2000 US 504610
(71) Applicant: International Business Machines Corporation, Armonk, NY 10504 (US)
(72) Inventor: Challenger, James R.H., IBM United Kingdom Ltd., Winchester, Hampshire S021 2JN (GB); Iyengar, Arun K., c/o IBM United Kingdom Ltd., Winchester, Hampshire S021 2JN (GB)
(74) Representative: Davies, Simon Robert

(57) **Abstract**

The present invention relates to a system and method for managing computer memory, comprising maintaining multiple sets of free blocks of memory wherein a free block is added to a set based on its size. In response to a request for a block of a requested size, a set of blocks is searched for a free block which is at least as large as the requested size but smaller than the requested size plus a threshold. If such a block is found, the block is allocated in its entirety.

## Description

The present invention relates to computer storage methods and systems, and more particularly to methods and systems for dynamic storage allocation.

Many computer systems need to allocate storage dynamically. Dynamic storage allocation is used by operating systems to allocate storage for executing programs. Other examples of dynamic storage allocation include Web servers which store Web data. In many cases, the sizes of memory remain unknown until the time of the request. The lifetime for a dynamically allocated block may also be unknown. A considerable amount of work has been performed in developing efficient dynamic storage allocation algorithms for main memory. Considerably less work has been done in developing efficient dynamic storage allocation algorithms for disks.

Dynamic storage allocation on disk is important for a number of reasons. In many cases, it is essential to have data which persists over time, even after the system has been shut down. Disk memory provides such persistent storage. Disk memory also provides fault-tolerant storage, that is, information stored on disk can often be preserved after a system crash in situations where the contents of main memory are lost. Another advantage of disk memory is the possibility that more disk memory can be made available at a more reasonable price than main memory. It can thus be used for storing information which cannot fit in main memory.

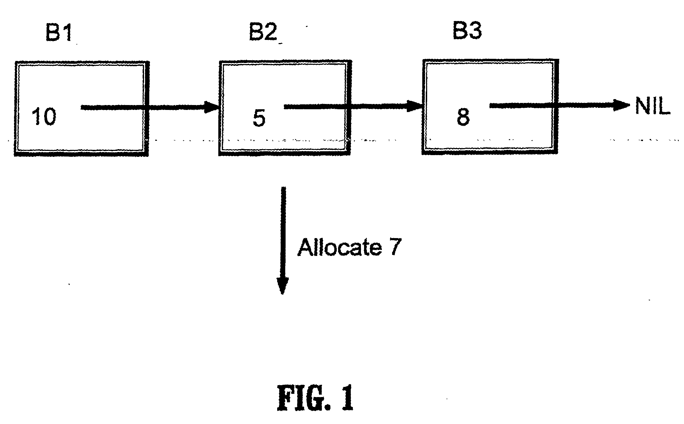

Referring to figure 1, a first fit system allocates (all or part of) the first memory block located which is large enough to satisfy a memory request. For a memory request of "7", a first fit returns B1 since this is the first block encountered which can satisfy the request. A best fit system allocates (all or part of) a smallest block which is large enough to satisfy a request. In figure 1, block B3 would be returned since "7" fits best in B3 (which has a capacity of 8).

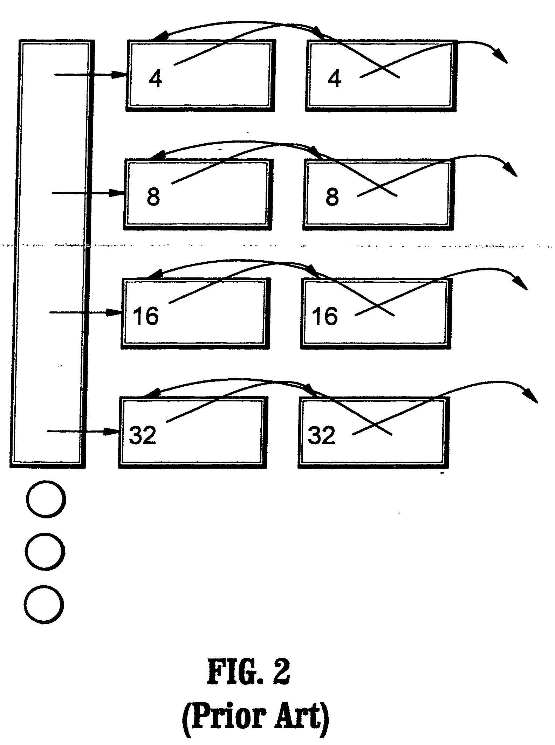

Referring to figure 2, in a binary buddy system, block sizes are in powers of 2 (eg, 4 and 4, 8 and 8, etc.). Many dynamic storage allocators (DSA's) maintain one or more lists of free blocks. Such lists are known as free lists, eg, lists of free blocks. Separate free lists exist for blocks of different sizes. Buddy systems allocating blocks of other sizes also exist as well. A good overview of prior art in dynamic storage allocation is described in a paper by Arun Iyengar entitled "Scalability of Dynamic Storage Allocation Algorithms" published in Proceedings of IEEE Frontiers '96, October 1996, as well as the bibliographic references in that paper.

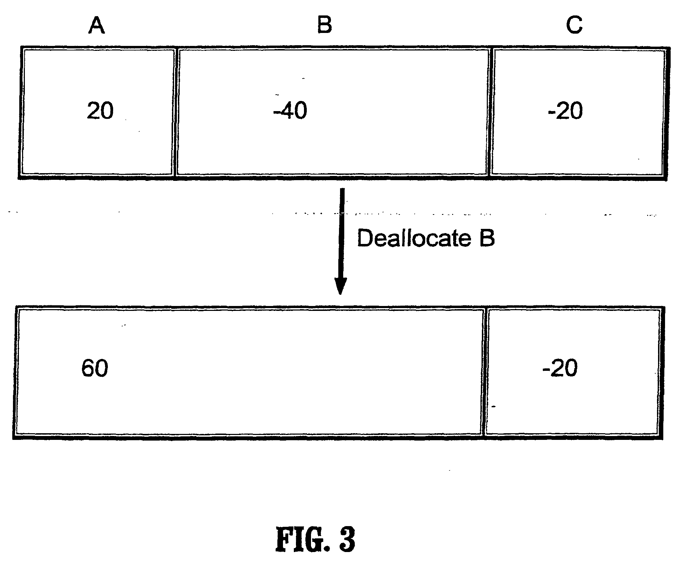

Dynamic storage allocators (DSAs) can use different methods for coalescing adjacent free blocks. One approach is to use immediate coalescing, in which a deallocated block is combined with neighboring free blocks at the time the block is deallocated as shown in figure 3. In figure 3, the block sizes are indicated in each block. A positive size indicates a free block and a negative size indicates an allocated block.

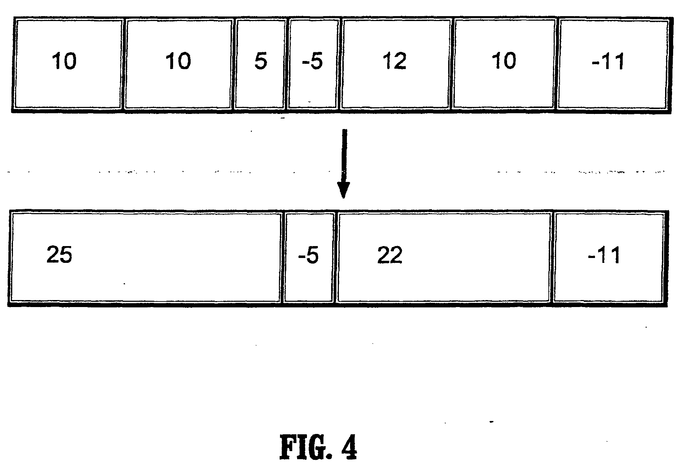

Referring to figure 4, another approach includes deferred coalescing. When deferred coalescing is used, adjacent free blocks are not automatically combined after a deallocation. Instead, at some point (such as when a large enough block to satisfy a request cannot be located), the DSA will scan through blocks in memory and combine adjacent ones as shown in figure 4.

Fragmentation is memory wasted by a DSA. Internal fragmentation is memory lost by satisfying a request with a block larger than the requested size (eg, satisfying a request for a block of size 25 with a block of size 32).

External fragmentation occurs when free blocks become interspersed with allocated blocks. In these situations, an allocation request for b bytes may not be capable of being satisfied even if more than b bytes are free because the largest contiguous block of free storage is smaller than b bytes.

Multiple free list fit I (MFLF I) as described in "Scalability of Dynamic Storage Allocation Algorithms" cited above uses multiple free lists, organized by size. Free lists for small blocks are known as quick lists. Free lists for large blocks are known as misc lists. When a single misc list is maintained, MFLF I degenerates into a storage allocation system known as quick fit.

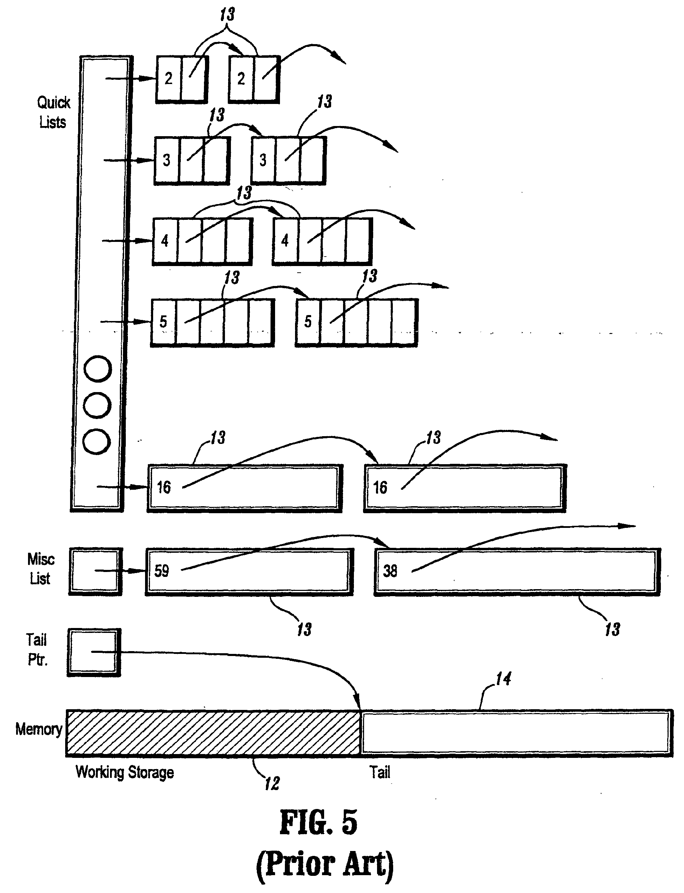

Referring to figure 5, a quick fit technique is shown. In this system, quick lists exist for blocks up to size 16. The number of quick lists can be varied to improve performance for different request distributions. In this example, allocations for a block of size s where 2 ≤ s ≤ 16 (2 is the minimum block size) is done by examining the quick list for size s. If this list is not empty, the first block on the list is used to satisfy the request. Note that it is possible to have quick lists for block sizes corresponding to multiples of grain sizes. For example, in figure 2, the grain size is 1. If the grain size is 1000, quick lists for blocks of size 1000, 2000, 3000,..., 16000, (a total of 16 quick lists) may be used. MFLF I uses deferred coalescing. The memory is divided into working storage 12 and a tail 14 as shown in figure 5. Working storage 12 includes allocated blocks and blocks on a free list. A tail 14 includes a contiguous block of unallocated storage at one end of the memory. Initially, before any memory is allocated, the tail 14 includes all memory capable of being allocated, and free lists are empty. Free lists include quick lists and misc lists, where misc lists are employed for larger memory blocks. The blocks identified by the reference 13 include a size (indicated by the numbers in blocks 13). When a request cannot be satisfied by examining one or more free lists, the request is satisfied by allocating from the tail 14. A tail pointer (tail ptr.) indicates where the tail 14 begins. Free lists are populated when allocated blocks are deallocated.

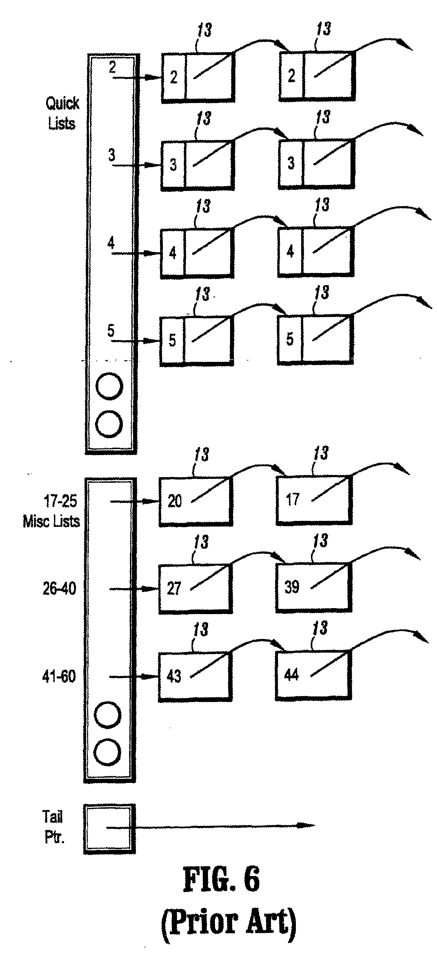

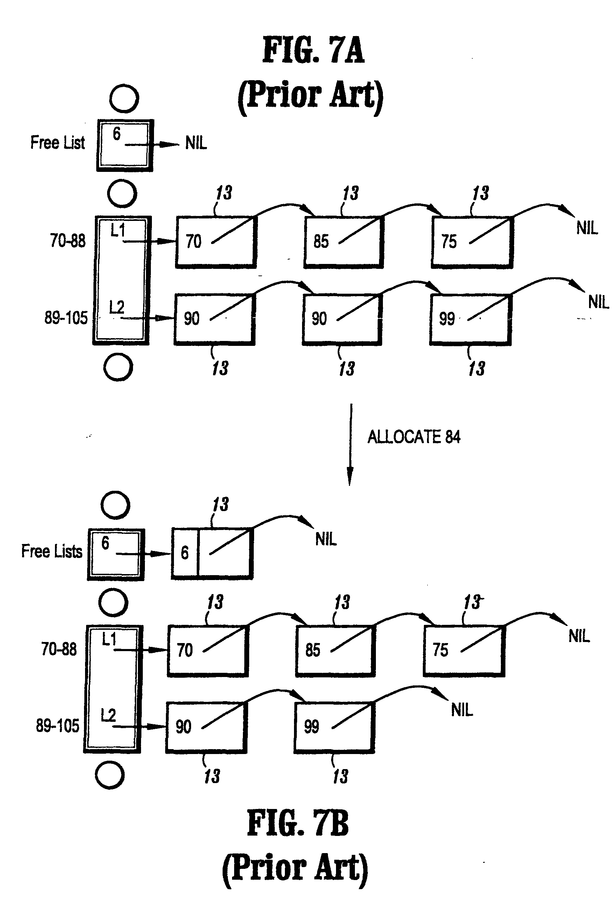

To satisfy a request for a block which is too large for a quick list, the quick fit technique uses a first fit search of the misc list. Searches for large blocks may require many instructions. To reduce this overhead, MFLF I can use multiple misc lists, as indicated in figure 6, instead of a single list as in the quick fit technique. In figure 6, a misc list exists for blocks 13 of size 17-25, another one exists for blocks 13 of size 26-40, and yet another one exists for blocks of size 41-60. Various strategies can be used for satisfying a request, including the one shown in figures 7A and 7B to allocate "84" using MFLF I. Figures 7A and 7B show "before" and "after" snapshots of the memory when the request to allocate 84 is satisfied. In figures 7A and 7B, the system allocates a first block on list L2 to satisfy the request by splitting a block of size "90" and returning the excess of size "6" to a free list. The system examines L2 instead of L1 because a smallest block allowed on L2 is of size 89. Therefore, it is not necessary to search beyond the first block in L2 to satisfy a request of size less than or equal to 89.

Although the techniques described above are sufficient for many applications, straightforward adaptations of main-memory dynamic storage allocation algorithms to disk systems often results in poor performance because the latency for accessing and writing to disks is much higher than for main memory.

It is an object of the present invention to mitigate at least some of the problems of the prior art.

Accordingly, a first aspect of the present invention provides a method for managing computer memory comprising the steps of maintaining multiple sets of free blocks of memory wherein a free block is added to a set of blocks of free memory based on the size of the free block. In response to a request for a block of a requested size, a search is conducted of the set of blocks for a free block which is at least as large as the requested size but smaller than the requested size plus a threshold. If such a block is found, the block is allocated in its entirety.

Preferably, an embodiment provides a method comprising the step of maintaining multiple sets of free blocks which may include the step of maintaining the multiple sets of free blocks on a disk or in main memory. Preferably, if the free block is not found but at least one block at least as large as the requested size is found, an embodiment comprises the steps of splitting the at least one block at least as large as the requested size and satisfying the request with a second block resulting from the splitting step. The at least one block being split may be a smallest found block larger than the requested size. The multiple sets may include a set of largest blocks and the first threshold may be larger than a smallest permitted block size for the largest set of blocks and an embodiment may additionally include the step of searching the largest set of blocks to satisfy the request. The step of searching may include the step of searching the set which includes a list, the list including memory block allocation information for the set. The method may further include the step of dynamically adjusting at least one of the first and the second thresholds to tune performance.

In still other embodiments, there may be included the steps of maintaining a contiguous block of memory, selecting the set of free blocks based on the requested size, in response to the set of free blocks not being empty, allocating at least part of a first block located in the set and in response to the set being empty, satisfying the request from the contiguous block of memory. The method may include the steps of maintaining a pointer to the contiguous block for a first pointer location, in response to a request for storage of a given size, incrementing the pointer by the given size to point to a second pointer location and satisfying the request using a part of the contiguous block beginning at the first pointer location. The method may also include deallocating an allocated block to a new set of free blocks based on the size of the allocated block.

A further aspect of the present invention provides a method for managing a block of contiguous persistent memory includes the steps of maintaining a first pointer in main memory for determining a first free byte in a first block of memory, maintaining headers in the persistent storage for a plurality of blocks wherein the headers include at least one code byte and allocating a second block from the first block by setting the at least one code byte for the second block to indicate that the second block is no longer part of the first block and updating the first pointer in the main memory.

In other embodiments, the step of adding a block, b, to the first block may be included and may comprise the step adding including the steps of modifying a code byte corresponding to b to indicate that b is part of the first block, and updating the first pointer in the main memory. The at least one code byte may serve other functions in addition to indicating that the second block is no longer part of the first block. The method may include the step of periodically updating a second pointer in the persistent memory based on the value of the first pointer in the main memory. The method may further include the step of, in response to a system failure, updating the first and second pointers by examining the at least one code byte. The headers may be initialised using a single block write.

An embodiment provides a method for coalescing adjacent free blocks in persistent storage which includes the steps of maintaining a header for each block indicating a size and an allocation status of the block, coalescing the free blocks by examining header information to combine adjacent free blocks and periodically storing information in the persistent storage indicating a level of coalescing achieved.

The method for coalescing may include the steps of, in response to a system failure during coalescing, reading information in the persistent storage to determine the level of coalescing achieved before the system failure and resuming coalescing at a point based on the information in the persistent storage.

Viewed from another aspect the invention provides a method for managing persistent storage in a memory storage system including a main memory and at least one disk memory device, including maintaining headers in persistent storage for a plurality of blocks wherein a header for each block includes a block size and an allocation status of the block and maintaining at least one data structure in main memory for allocating and deallocating persistent storage. A storage block is allocated by identifying the storage block by employing the at least one data structure in the main memory, modifying the at least one data structure in the main memory and assigning an allocation status for the block on disk. A storage block is deallocated by assigning an allocation status on disk for the block and modifying the at least one data structure in main memory.

In other embodiments, the method may include the step of determining the at least one data structure in the main memory after a system restart from a plurality of headers in the persistent storage. The step of determining the at least one data structure in the main memory after the system restart may include at least one disk access of the persistent memory in which a single disk access reads in a plurality of bytes. The method may further include the steps of outputting information from the at least one data structure in the main memory to the persistent storage before a system shutdown and determining the at least one data structure in the main memory after a system restart from the outputted information. The step of maintaining headers in persistent storage may include providing multiple headers which are stored in a contiguous area in the persistent storage. The step of maintaining headers in persistent storage may include maintaining a header having a pointer field which points to a location in the persistent storage. The method may further include the steps of maintaining a list of blocks in the persistent storage using pointer fields in the headers and maintaining at least one current pointer in the main memory to a head of the list of blocks.

In still other embodiments, the steps of creating a new block in the persistent storage, setting a pointer field in the persistent storage for the new block to a value of the at least one current pointer, p, in the main memory and setting, p, to the new block may be included. A header for the new block may be initialised using a single block write. The method may include the step of periodically updating at least one head in persistent storage corresponding to the list from the at least one current pointer in the main memory. The list may include a plurality of lists and the lists also include heads corresponding to the plurality of lists which are maintained contiguously in the persistent storage, and the method may further include the step of updating the heads in a single block write. The first storage block and the second storage block may include the same block.

Viewed from another aspect the invention provides a method for managing persistent storage in a memory storage system comprising a main memory and at least one disk memory device including the steps of maintaining headers in persistent storage for a plurality of blocks wherein a header for each block includes a block size, an allocation status of the block, and a pointer, maintaining at least one data structure in main memory for allocating and deallocating to the persistent storage, and allocating a first storage block of the plurality of blocks. The step of allocating includes the steps of identifying the first storage block using the at least one data structure in the main memory, modifying the at least one data structure in the main memory and assigning an allocation status for the first storage block in the persistent storage, deallocating a second storage block of the plurality of blocks by assigning an allocation status in the persistent storage for the second storage block, updating a pointer field on disk for the second storage block and modifying the at least one data structure in the main memory.

In the other embodiments, the steps of maintaining a list of blocks in the persistent storage using pointer fields in the headers and maintaining at least one current pointer in the main memory to a head of the list of blocks may be included. The method may include the step of in response to a failure, examining the list of blocks to remove allocated blocks. The method may include the step of terminating the examining step when a free block on the list of blocks is found. The at least one data structure in the main memory may include at least one list of free blocks corresponding to the list of blocks in the persistent storage. The method may further include the step of periodically updating at least one head in persistent storage corresponding to the list of blocks from the at least one current pointer in the main memory. The list of blocks may include a plurality of lists and heads which are maintained contiguously in the persistent storage, and further comprising the step of updating the heads in a single block write.

In still other embodiments, the step of updating a pointer field may include the step of setting a pointer in the pointer field to a head of at least one list, L, of free blocks in the main memory and the step of deallocating may further include the step of adding the second storage block to the head of L in the main memory. The header for the second storage block may be updated using a single block write. The method may further include the step of determining the at least one data structure in the main memory after a system restart from a plurality of headers in the persistent storage. The step of determining the at least one data structure in the main memory after the system restart may include accessing a disk in which a single disk access reads in a plurality of bytes. The method may include steps of outputting information from the at least one data structure in the main memory to the persistent storage before a system shutdown, and determining the at least one data structure in the main memory after a system restart from the outputted information. The method may include the step of storing multiple headers in a contiguous area in persistent storage. The first storage block and the second storage block may include the same block.

Another method for managing memory in a persistent storage system includes the steps of maintaining at least one data structure in a main memory for allocating and deallocating persistent storage, allocating and deallocating the persistent storage entirely from the at least one data structure without accessing or writing to the persistent storage, periodically checkpointing storage allocation information to the persistent storage and determining the at least one data structure in main memory after a restart from the checkpointed information.

Yet another method for managing memory in a persistent storage system includes the steps of maintaining at least one data structure in a main memory for allocating and deallocating persistent storage, allocating and deallocating the persistent storage entirely from the at least one data structure without accessing or writing to persistent storage, outputting information from the at least one data structure in the main memory to persistent storage before a system shutdown, and determining the at least one data structure in the main memory after a system restart from said outputted information.

The use of a method such as disclosed herein can help reduce the number of accesses and the number of writes to a disk memory, leading to a memory allocation/deallocation scheme which is more efficient and with faster access times.

The methods and method steps may be implemented with a program storage device readable by machine, tangibly embodying a program of instructions executable by the machine to perform the method steps.

Embodiments of the present invention will now be described by way of example only with reference to the accompanying drawings in which:
Figure 1 is a schematic diagram showing a first fit allocation and a best fit allocation;
Figure 2 is a schematic diagram showing a prior art binary buddy system;
Figure 3 is a schematic diagram showing immediate coalescing of memory blocks;
Figure 4 is a schematic diagram showing a deferred coalescing of memory blocks;
Figure 5 is a schematic diagram showing an example of a quick fit for a special case of multiple free list fitting in accordance with the prior art;
Figure 6 is a schematic diagram showing an example of multiple free list fitting (MFLF I) in accordance with the prior art;
Figures 7A and 7B depict before and after snapshots of an allocation example for large blocks using MFLF I in accordance with the prior art;
Figure 8 is a block/flow diagram showing a multiple free list fit allocation (MFLF III) in accordance with an embodiment;
Figure 9 is a block/flow diagram showing a multiple free list fit (MFLF III) allocation for large blocks in accordance with an embodiment;
Figure 10 is a block/flow diagram showing coalescing of adjacent free blocks in accordance with an embodiment;
Figure 11 is a block/flow diagram showing allocation using memory management method 1 in accordance with an embodiment;
Figure 12 is a block/flow diagram showing deallocation using a first memory management method (I) in accordance with an embodiment;
Figure 13 is a block/flow diagram illustrating a second memory management method (II) in accordance with an embodiment;
Figure 14 is an illustrative example of the second memory management method II in accordance with an embodiment;
Figure 15 is a block/flow diagram illustrating a third memory management method (III) in accordance with and embodiment;
Figure 16 is an illustrative example of the third memory management method III in accordance with an embodiment;
Figure 17 is a block/flow diagram illustrating a fourth memory management method (IV) in accordance with an embodiment;
Figure 18 is a block/flow diagram for managing tail allocations and deallocations in accordance with an embodiment;
Figure 19 is a plot of illustrative test results for an embodiment versus a prior art embodiment; and
Figure 20 is another plot of illustrative test results of an embodiment versus a prior art embodiment.

Embodiments of the present invention relate to memory management and allocation systems and methods. The systems and methods presented herein provide improved performance over prior art systems and methods, and the embodiments find particular application in relation to disk memories. Techniques in the prior art for storing information persistently on disks include using file systems and databases.

When using an embodiment, information may be stored on disk using much less overhead as compared to the situation if prior art techniques were employed. Also, by employing an embodiment, large numbers of objects can be stored. Many file systems are limited by the number of files that can be stored in a directory; at least some embodiments do not have this limitation on the number of objects that can be stored.

In one embodiment, a method is provided to at least reduce splitting of blocks without significantly wasting extra storage space. The utility of embodiments of the present invention extends to both disk allocation and main memory allocation. The embodiments provide new and useful dynamic storage allocation methods which have similarities to MFLF I, but which includes modifications which produce dramatic improvements in memory management and disk performance. One modification includes a reduction in the number of block splits. Reducing the number of block splits becomes more important when splitting blocks is undesirable, such as, for example, in disk memory allocation.

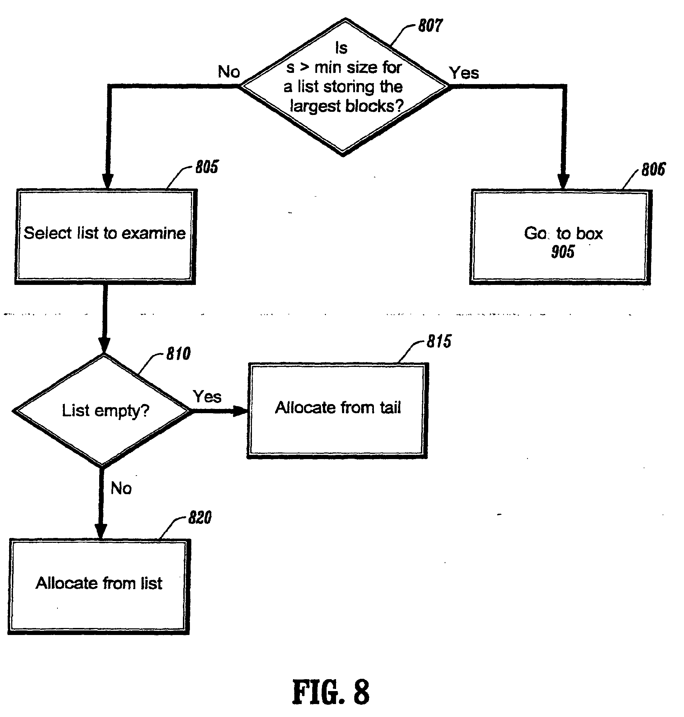

It should be understood that the elements shown in figures 8-19 may be implemented in various forms of hardware, software or combinations thereof. Preferably, these elements are implemented for storage devices on one or more appropriately programmed general purpose digital computers having a processor and memory and input/output interfaces. It is to be understood that, upon disclosure of the embodiments, one skilled in the art could adapt a number of commonly used storage allocation algorithms to employ the embodiments as will be described herein below. The present invention will therefore be illustratively described by the following embodiments which should not be construed as limiting the present invention. The terms "memory" or "main memory" as employed herein may refer to volatile memory, such as random access memory or cache memory, although other memory types may be employed, disk or disk memory, that is, persistent memory, which may include, hard disks, floppy disks, compact disk, DVD, disk arrays or other persistent storage devices.

MFLF I, as described above, will sometimes split free blocks during allocations to allocate part of a block and return the other part to free storage. The embodiments reduce the number of blocks which are split as compared with MFLF I. This is one desirable parameter for allocating disk storage, because splitting blocks can cause extra disk operations (where an operation is a read or a write). The embodiments, therefore, make fewer splits when allocating blocks as compared to MFLF I. The present invention can be used for allocating main memory as well as disk memory.

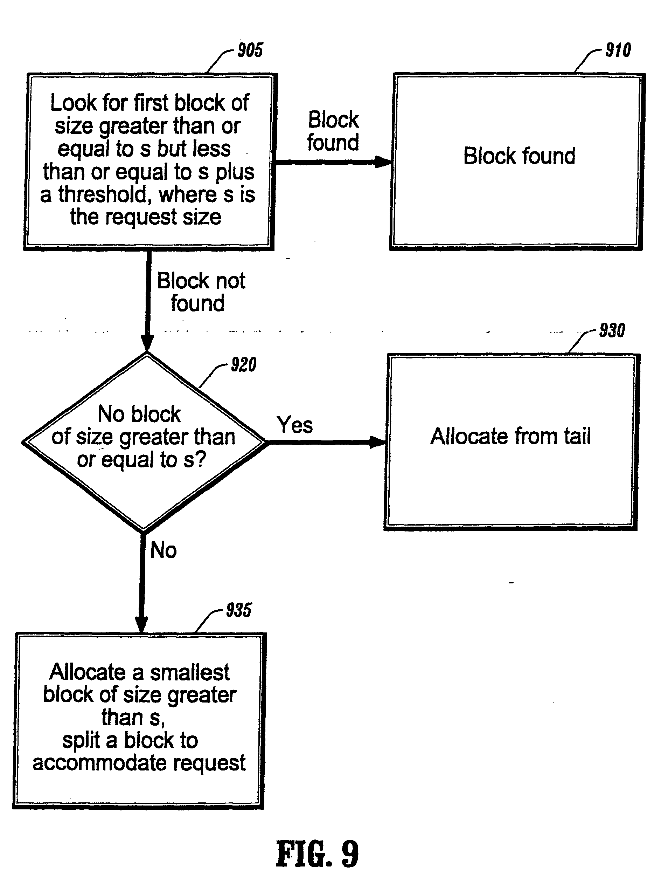

Referring now to the drawings in which like numerals represent the same or similar elements and initially to figures 8 and 9, block diagrams showing systems/methods for allocation and storage management for disks are depicted. Lists (eg, quick lists, misc lists or free lists) usually have lower or minimum (min) and upper or maximum (max) sizes representing the largest and smallest blocks which can be stored (for a quick list where the grain size is 1, the min and max sizes would be identical). In systems with maximum block sizes, the maximum size for the last misc list may be the maximum block size. In systems without maximum block sizes, the last misc list may not have a block with the maximum size.

Let s be requested size of a block. In box 807, it is determined if s > the minimum size for the list storing the largest blocks. If so, control is transferred at box 806 such that processing continues to box 905 of figure 9. If not, processing continues to box 805. In box 805, the system selects an appropriate list to examine. The list L with the smallest minimum size, lmin, such that lmin *≥* s is selected. Other criteria may also be employed for list selection. Processing continues at box 810 where it is determined if list L is empty. If so, a block of size lmin is allocated from a tail and used to satisfy the request in box 815. If list L is not empty, the first block from list L is used to satisfy the request without splitting any memory blocks in box 820. When list L includes blocks of different sizes, a preferable extension would be to do some searching of list L to identify a better fitting block and/or to split the block selected for allocation to reduce internal fragmentation.

Referring to figure 9, an allocation strategy for large blocks is shown in accordance with an embodiment. Let L be the misc list storing the largest blocks. In box 905, L is examined to locate a first block of size ≥ s but less than or equal to (s + a), where a represents an acceptable waste threshold. Acceptable_waste is a parameter which is used to split blocks in some cases during allocations to reduce internal fragmentation. If an appropriate block is found, the block is allocated in box 910 without splitting. If such a block is not found, there are two possibilities. If no block in L is large enough to satisfy the request, a block of size s is allocated from the tail in block 930. If L includes a block which is large enough, a smallest block in L of size > s is split into first and second fragments f1 and f2 of size s and r respectively (box 935). The first fragment f1 is used to satisfy the request. The second fragment f2 is placed at the beginning of a free list corresponding to its size. The acceptable_waste parameter can vary dynamically. A straightforward variation would be to use a function in place of the acceptable_waste parameter, which could take arguments such as the requested size, for example.

Deallocation is addressed as follows. Deallocated blocks are placed at the beginning of free lists corresponding to their sizes.

Embodiments of the present invention include methods for performing deferred coalescing for a dynamic storage allocator (DSA) management of disk storage, which can be used in conjunction with a variety of different methods, including but not limited to first fit, best fit, buddy systems, MFLF systems, etc.

Optionally, storage blocks including headers are utilised. Headers include block sizes as well as a tag indicating whether the block is free or allocated. Header information is included on a disk so that it is preserved if the system crashes or when the system is turned off. Header information may also be cached in main memory for faster access. Header information may be maintained on disk in a variety of ways. One method is to use designated bytes of a block (eg the initial bytes) for header information. Another method would be to store header information for multiple blocks in a single block of contiguous memory.

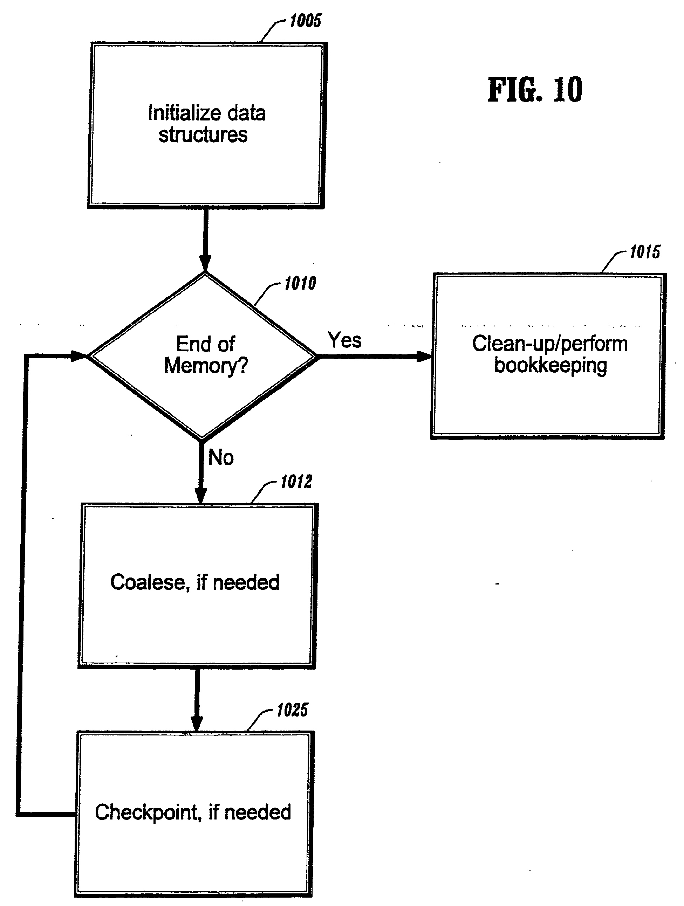

Referring to figure 10, one preferred method for coalescing adjacent free blocks is shown. In box 1005, data structures needed for coalescing are initialised. For example, many DSA's utilise free lists. Such DSA's would use box 1005 to initialise free lists (eg make one or more free lists empty). Boxes 1010, 1012, and 1025 form a loop in which the system scans header blocks and combines adjacent free blocks. The system begins with blocks at one end of memory, reading the header corresponding to the first block. The system then scans through headers sequentially, and combines adjacent free blocks. For memory systems utilising free lists, free blocks are added to appropriate free lists after they have been coalesced. In box 1025, the system checkpoints the coalesced blocks by recording in persistent storage the point at which the coalesce has advanced. One purpose of the checkpoint is to reduce the amount of work that is needed in the event of a failure. Checkpointing is employed to update obsolete information.

In the event of a system failure, the contents of main memory are likely to be lost, while the contents of disk memory are likely to be preserved. In the event of a system failure, the checkpoint can eliminate the need to redo most or all of the coalescing work already performed. In contrast, prior art methods would require a re-scan of headers from the beginning after such a failure. Advantageously, by providing sequential scanning of headers and checkpointing, a more robust and persistent memory system is provided. Furthermore, time wasted re-coalescing after failures is reduced or eliminated. For example, 50% or more of coalescing time is eliminated, in many cases 100% of coalescing time is eliminated. The frequency with which checkpointing is performed can be varied as appropriate, for example, according to a number of transactions or after a set time has elapsed. Frequent checkpointing reduces the amount of work that needs to be redone after a failure.

In box 1015, final clean up and bookkeeping operations are performed. For example, if the end of working storage includes a free block, that block may be added to the tail in this step.

Embodiments of methods for allocating and deallocating persistent storage will now be described in greater detail. The embodiments may be used in conjunction with a variety of DSAs including but not limited to MFLF systems, first fit, best fit, etc. In a first illustrative memory management method (method I), disks maintain headers which include block sizes as well as a tag indicating whether the block is free or allocated. Free list data structures for handling allocations and deallocations are maintained in memory.

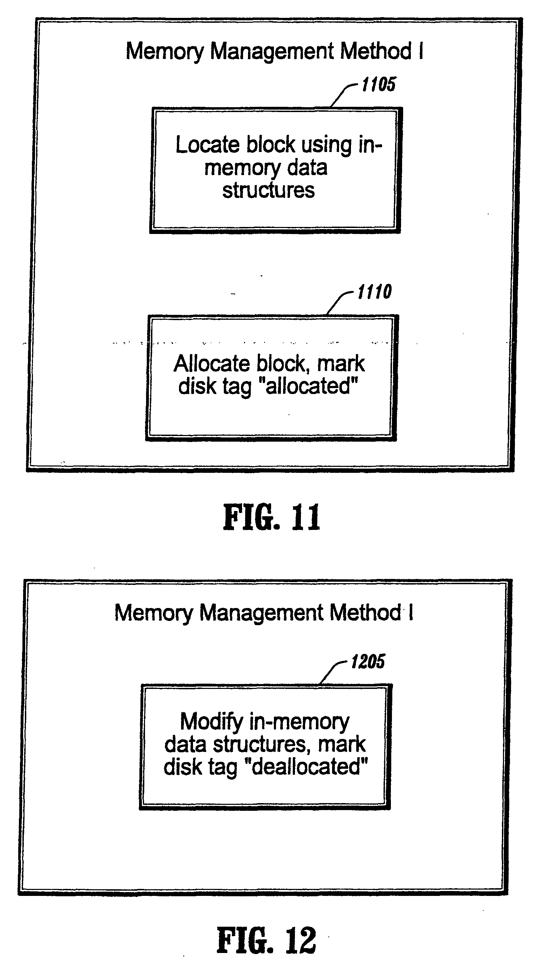

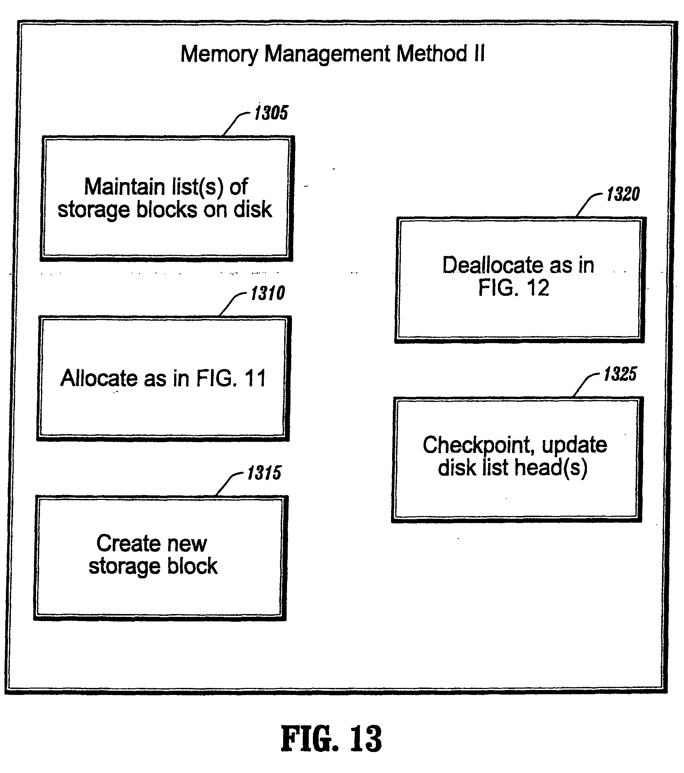

Referring to figure 11, allocation in accordance with memory management method I is shown. It should be noted that the boxes shown in figure 11 may be performed or executed in any order. In box 1105, an appropriate free block is located using in-memory data structures. Once the block is located, it is allocated in box 1110 by modifying appropriate in-memory data structures and marking a header tag on disk "allocated". If splitting is not performed, allocation only consumes a single disk operation.

Referring to figure 12, deallocation in accordance with method I is shown. Appropriate in-memory data structures are modified to deallocate a block. In addition, the header tag on the disk is marked "deallocated" in box 1205. If no coalescing is performed, deallocation only consumes a single disk operation. When the system is restarted after a failure or a normal shutdown, in-memory data structures (such as free lists) used by the DSA can be constructed by scanning the headers stored on disk. Such data can be read in incrementally as needed and does not have to be read in all at once, although it may be read in all at once.

In one embodiment, the time for reading information from disk may be reduced by maintaining multiple header words in one or more contiguous blocks of disk storage. When a contiguous block, b1, becomes full, a new block, b2, can be chained to b1 to include additional headers. Contiguous blocks of storage on disk can be read more quickly than information which is not contiguous. For example, one block read (or a small number of block reads) can be used to read several contiguous headers. Even if a block read is not used, multiple reads from disk locations in close proximity to each other may need only small movement of disk heads which saves time.

Another embodiment, which improves start-up times after a normal shutdown, is for the DSA to output main memory data structures (such as free lists) to one or more contiguous blocks of disk storage just before shutdown. Upon restart, the DSA reads in data structures from the storage blocks written just before shutdown. This might be considerably faster than obtaining information from headers.

These embodiments, as described above, may be employed for the memory management methods described below as well as for memory management method I.

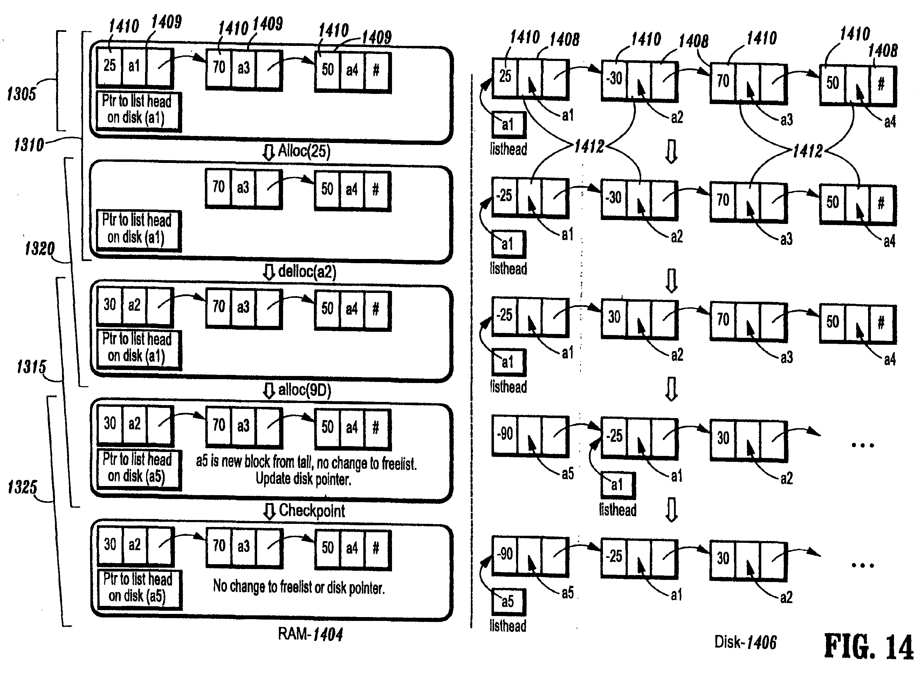

Referring to figure 13, another illustrative memory management method (method II) is depicted in accordance with an embodiment for managing persistent storage on disk. It should be noted that the boxes shown in figure 13 may be performed or executed in any order. The system maintains at least one list of blocks (which may include either of or both of free and allocated blocks) on disk (box 1305). The list may be maintained by keeping list pointers in headers. Allocation (box 1310) takes place in the manner as shown in figure 11 and described in the accompanying text. The in-memory data structures maintained by method II may be different to those used by method I, however (see eg, figure 14). Deallocation (box 1320) takes place in the manner as shown in figure 12 and described in the accompanying text.

It may be beneficial to create new storage blocks (box 1315). This may occur when a block is allocated from the tail in MFLF algorithms. It may also occur after a block has been split. When a new storage block b is created, its disk header is initialised in box 1315, which includes the allocation status of the block, block size, and pointer to the next block on the list. To reduce, and preferably minimise, disk operations, these header fields can be maintained in contiguous bytes of disk storage. In this way, the headers can be updated efficiently, such as by a single block write or by multiple writes but with little movement of disk heads. New storage block, b, is added to the head of the free list. A head_of_list pointer may also be maintained in main memory; if so, it is updated to the new storage block, b. To reduce, and preferably minimise, disk operations, the disk pointer to the head of the list may not be updated in box 1315. This means that the disk pointer to the head of the list may become obsolete. To update these disk pointers, the system periodically checkpoints in box 1325. For example, the system may checkpoint after every n transactions, where n is a system parameter. Transactions may include allocations, deallocations or other storage operations. Alternatively, the system may checkpoint after every m new blocks are created, where m is a system parameter. Checkpoints are generally performed before the system is turned off during normal operation.

During the step in box 1325, disk head-of-list pointers are updated from head_of_list pointers maintained in main memory. In systems with multiple disk lists, it is desirable to maintain disk head-of-list pointers in contiguous memory locations on disk so that the head-of-list pointers can be efficiently updated, such as, for example, by performing a single block write or multiple writes with little movement of disk heads.

Referring to figure 14, an illustrative example is shown depicting memory allocation using memory management method II between a random access memory (RAM) and a disk. Memory management method II may be used in conjunction with MFLF algorithms. If it is so used, in-memory data structures are maintained for quick lists and misc lists. There does not have to be a one-to-one correspondence between in-memory lists and disk lists, although there may be.

When the system is restarted after a failure or a normal shutdown, in-memory data structures (such as free lists) used by the DSA can be constructed by scanning the headers stored on disk, either by examining block sizes and allocation status as in memory management method I, or by examining the lists stored on disk. Such data can be read in incrementally as needed and does not have to be read in all at once, although it may be read in all at once.

As shown in figure 14, memory management is depicted for a plurality of different storage operations. The processes are divided between a random access memory 1404 and a disk 1406. Memory blocks 1408 are depicted as rectangles. Memory blocks 1408 include numbers representing a size in a first position 1410 of the block, which are positive if free and negative if allocated. The memory blocks 1409 of main memory (RAM 1404) are listed with an address, eg, a1, a2, a3,...,a5 where a corresponding block is located on disk 1406. A listhead pointer points to the location of a first memory block on a list on disk 1406. The addresses of blocks 1408 on disk are indicated by address labels in a second position 1412 of blocks 1408. Address labels 1412 are depicted for ease of exposition, and such address labels are not necessarily stored on disk. A last position 1414 of blocks 1408 points to a next block of memory on the list or a "#" which means NIL or end of the list or set.

Storage operations in the example of figure 14 are described with reference to figure 13. RAM 1404 includes only blocks which are free. Maintenance of a list of blocks on disk is performed at Box 1305. Allocation (25) is performed in accordance with box 1310. Deallocation (a2) is performed in accordance with box 1320. Allocation (90) is performed in accordance with box 1315. Note that listhead a1 becomes obsolete due to the allocation from a tail which moves to the front of the list on disk. Checkpointing in accordance with box 1325 updates the listhead to a5 as shown in figure 14.

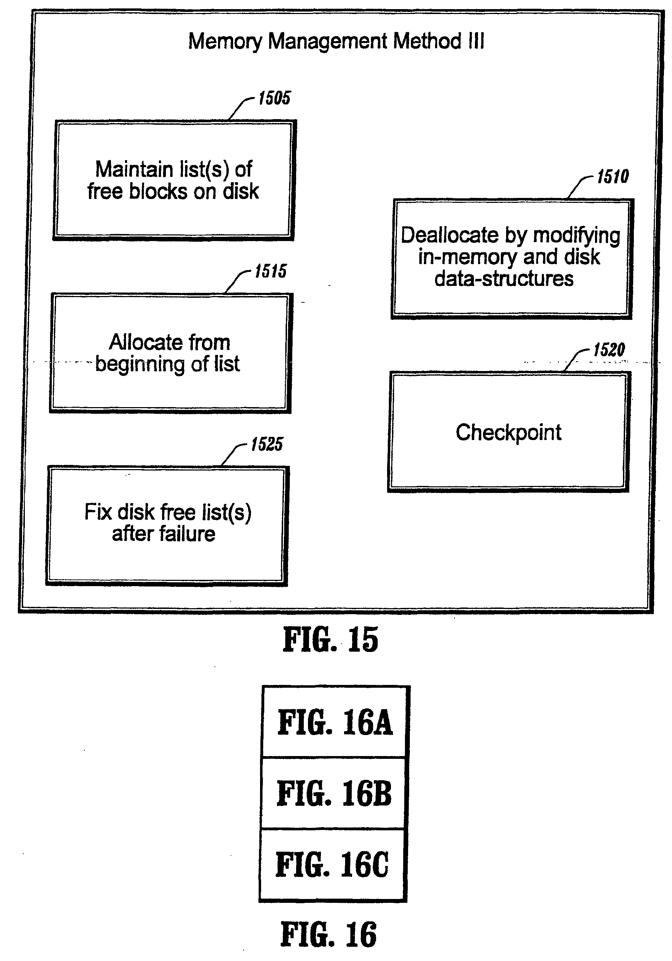

Referring to figure 15, a third memory management embodiment (method III) is depicted for managing persistent storage on disk. It should be noted that the boxes shown in figure 15 may be performed or executed in any order. The system maintains at least one list of free blocks on disk in box 1505. The list may be maintained by keeping list pointers in headers. The head of this list may become obsolete, but is updated during checkpoints performed in box 1520. An up-to-date version of this list is maintained in main memory. Method III is particularly useful when allocation takes place from a first member of the list. For MFLF methods, allocation from all quick lists and all but the last misc list may take place from the first member of the list, so these lists lend themselves well to the third memory management embodiment.

In box 1515, a block is allocated from the beginning of a free list. The in-memory free list is updated. In addition, the block is marked as being allocated on disk. However, the list pointers on disk are allowed to become obsolete to reduce the number of disk operations. In box 1510, a block is deallocated by adding it to the beginning of an appropriate free list and updating the in-memory data structures. The block is marked as being allocated on disk, and its header is updated to point to the next block on the free list. To reduce, and preferably minimise, the overhead for this disk update, the allocation status tag and pointer to the next list element may be stored in close proximity to each other on disk. The disk pointer to the head of the list is permitted to become obsolete to reduce the number of disk operations.

To update head-of-list pointers on disk, the system periodically checkpoints in box 1520. For example, the system may checkpoint after every n transactions, where n is a system parameter. In addition, checkpointing is generally performed before the system is turned off. During the step represented by box 1520, disk free list pointers are updated from head of list pointers maintained in memory. In systems with multiple free lists, it is preferable to maintain disk free list pointers in contiguous memory locations on disk so that the pointers may be updated efficiently, such as, for example, by performing a single block write or multiple writes with little movement of disk heads. Note that if the system fails at a time when one or more free lists on disk are not correct, such free lists may include allocated blocks. Such free lists are fixed after a failure in box 1525.

The system examines each free list on disk managed by memory management method III and eliminates allocated blocks. The system does so by scanning free lists starting from the beginning and examining headers. As soon as the system encounters a block on a free list which is free, the system stops examining the list because the remaining blocks on the list should also be free.

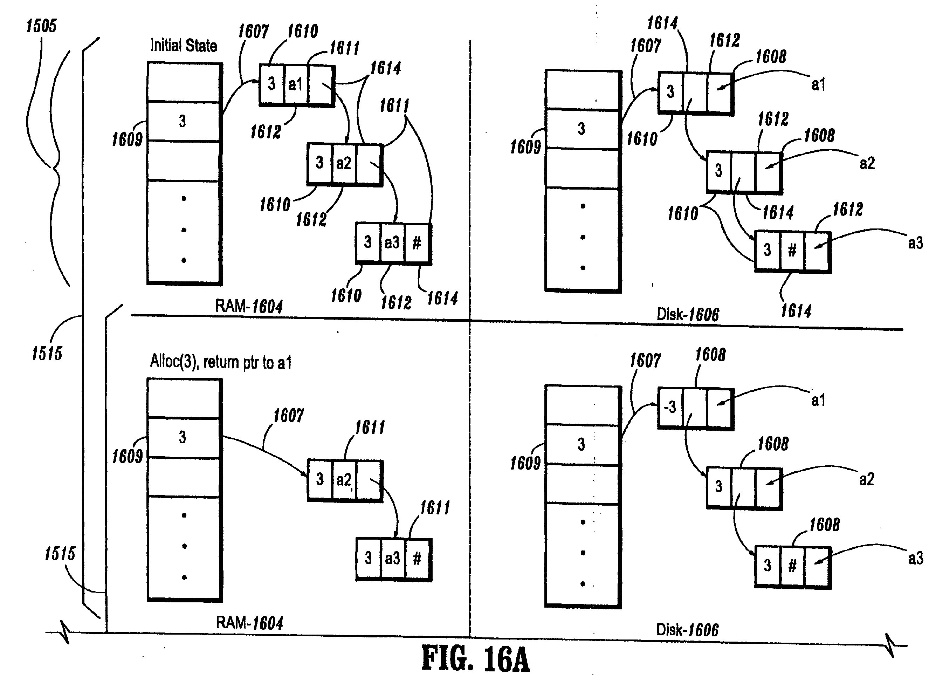

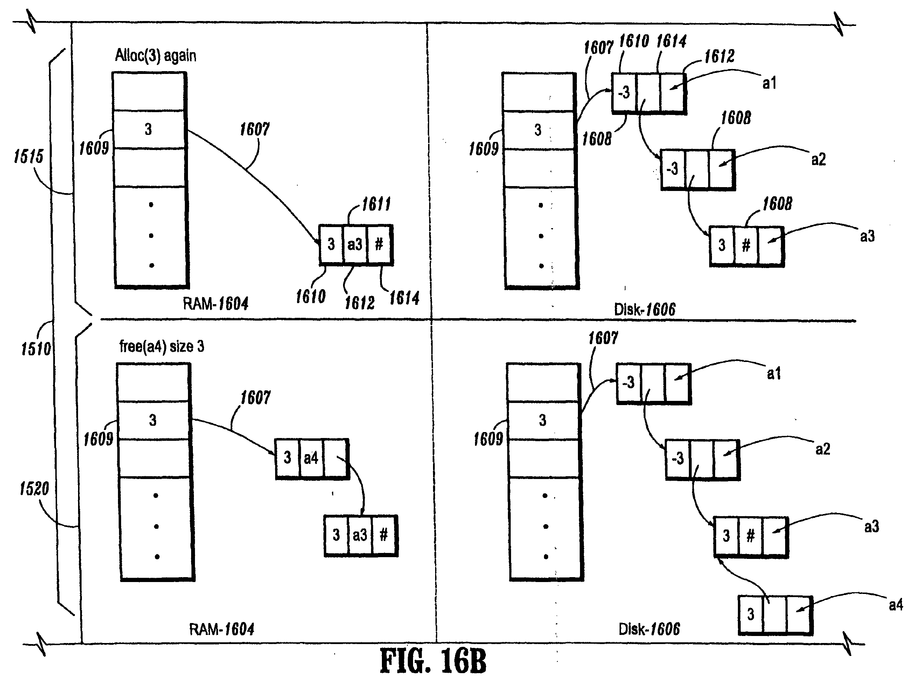

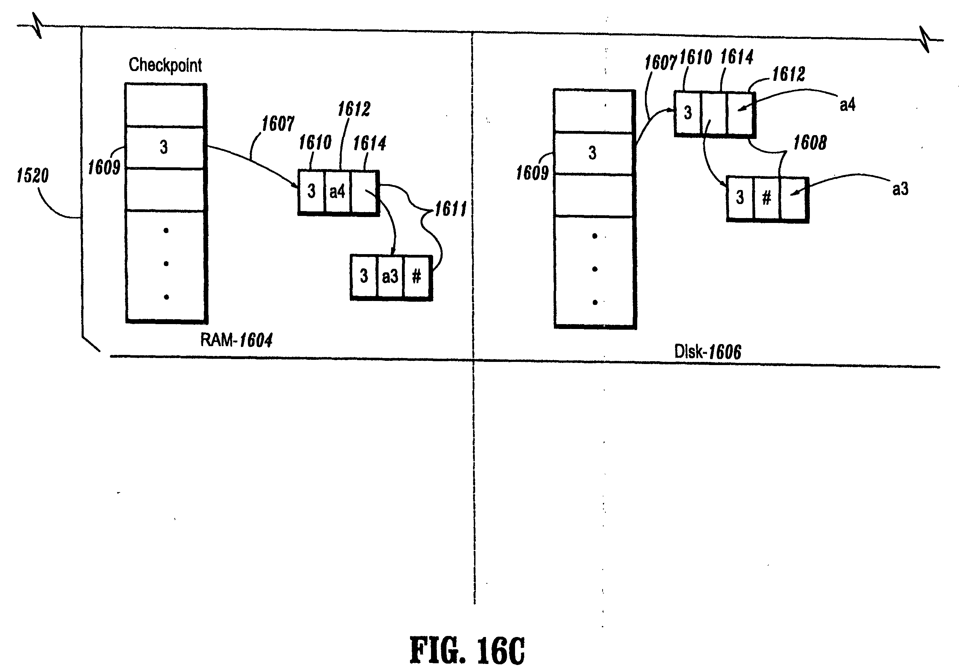

Referring to figure 16, an illustrative example of memory management method III is shown. As shown in figure 16, memory management is depicted for a plurality of different storage operations. The processes are divided between a random access memory 1604 and a disk 1606. Memory blocks 1608 are depicted as rectangles. Memory blocks 1608 include numbers representing a size in a first position 1610 of the block, which are positive if free and negative if allocated. The memory blocks 1611 of main memory (RAM 1604) include a free list 1607 which includes an index 1609 representing the blocks having a size of, in this example, "3". An address, for example, a1, a2, a3, a4, is included in the list 1607 where a corresponding block is located on disk 1606. The addresses of blocks 1608 on disk are indicated by address labels in a position 1612 of blocks 1608. Address labels 1612 are depicted for ease of exposition, and such address labels are not necessarily stored on disk. A position 1614 within a block 1608 points to a next block of memory or a "#" which means NIL or end of the list.

Storage operations in the example of figure 16 are described with reference to figure 15. Maintenance of a list of blocks on disk (Box 1505) is performed. Allocation (3) and return using a pointer to a1 is performed in accordance with box 1515. Allocation (3), again is performed in accordance with box 1515, as well. Deallocation or free (a3) is performed in accordance with box 1510. Note block 1608 with addresses a2 and a4 point to block address a3. This is fixed by checkpointing. Checkpointing in accordance with box 1520 updates the free list 1609 such that blocks with addresses a4 and a3 are maintained on the free list.

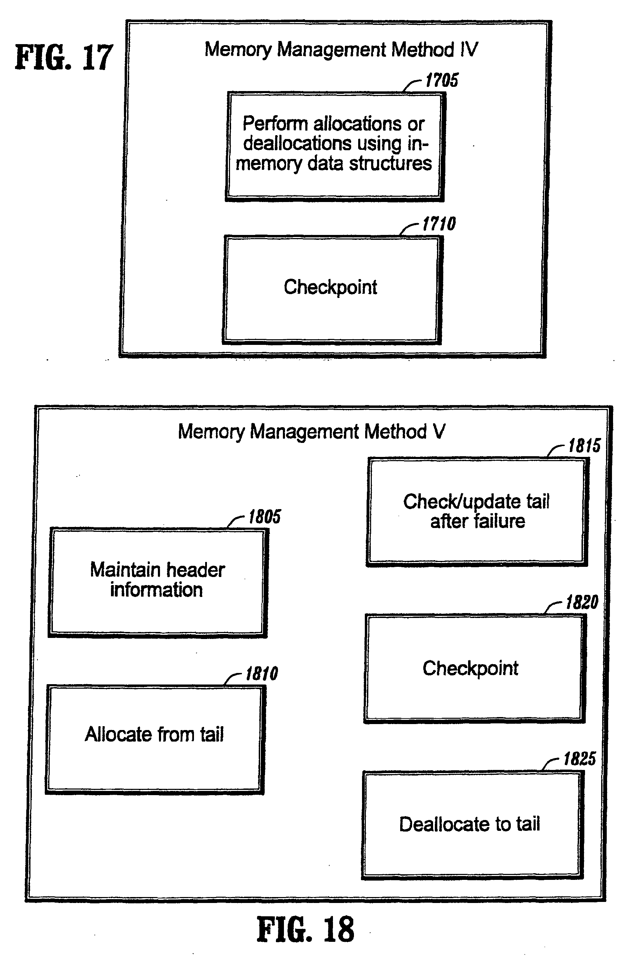

Referring to figure 17, another embodiment of a memory management method is depicted, which will be referred to as method IV. It should be noted that the boxes shown in figure 17 may be performed or executed in any order. The system maintains in-memory data structures for managing storage. Such in-memory data structures may include lists. Allocations and deallocations are performed by modifying in-memory data structures in box 1705. Usually, disk operations do not take place in box 1705. Thus, allocations and deallocations can be fast. The system periodically checkpoints information to memory in box 1710. For example, the system may checkpoint after every n transactions, where n is a system parameter. In addition, checkpointing is generally performed before the system is turned off. Just before a normal shutdown, the system can store additional information on disk (eg structure of free lists in memory, assuming the system is utilising free lists) which can be read in at a later time to reduce startup times. Such checkpointing permits the system to restart after a normal shutdown or a failure. Just before a normal shutdown, the system may store information on disk which the system may not store during a normal checkpoint. Such auxiliary information may be read in at a later time to reduce startup times.

Trade-offs between the different memory management methods may be considered for system designers in choosing a memory management method most suitable for performance needs. The memory management methods described herein provide many advantages over the prior art. Memory management method I needs less header space than memory management methods II and III. In addition, memory management method I performs fewer disk writes for allocations and deallocations than II and III. For memory management method I, information on disk is always up-to-date, and no checkpointing is needed.

Memory management method II permits multiple lists to be maintained on disk which can be used to locate blocks of specific sizes during start-up using fewer disk reads than method I. Checkpointing is employed for method II, and list heads on disk may not always be current.

Memory management method III employs free lists and all allocations can be made from the beginning of free lists to obtain best performance. Method III may be used to locate free blocks of specific sizes during start-up, thus, using fewer reads than methods I and II since method III employs multiple lists. Unlike memory management method II, method III lists only include free blocks (assuming a normal shutdown). Checkpointing is employed, lists on disks may need to be updated and lists on disks may have to be fixed after a failure.

Memory management method IV performs allocations and deallocations with no disk operations. However, method IV may include more checkpointing procedures than methods I to III. In addition, in the event of a failure, disk memory may be more obsolete using method IV than using the other methods.

Another embodiment (method V) for allocating storage will now be illustratively described. This embodiment is particularly useful when the system is allocating storage from a large block of disk memory (eg, the tail in figure 5) by maintaining and updating a pointer (tail pointer) to the first free byte.

Referring to figure 18, the system maintains headers on disk for blocks, including at least one byte known as a code byte, in box 1805. It should be noted that the boxes shown in figure 18 may be performed or executed in any order. The system also maintains variables in memory indicating the current tail pointer and the tail pointer on disk. The tail pointer on disk may be obsolete. In box 1810, the system allocates a block b1 from the tail. Information stored in the header by this step includes an allocated tag, block size and one or more code bytes. The tail pointer on disk is usually not updated in this step since the tail pointer may be distant from the header for bl on disk. Updating the tail pointer on disk may need to include an extra disk operation. By contrast, header bytes for b1 can be kept in close proximity on disk, so all of the updates to the header can generally be done using few (in many cases one disk write is sufficient) disk operations. Special information is stored in code bytes to indicate that the block is no longer part of the tail. It is possible for header bytes used for other purposes to also function as code bytes, reducing or eliminating the overhead incurred by code bytes. For example, memory management methods II and III use header bytes for storing block sizes and list pointers. These bytes could also function as code bytes.

The tail pointer in memory (but not on disk) is updated in box 1810. In box 1825, a block, b1, is deallocated to the tail. The code bytes are modified to indicate that b1 is now part of the tail. If the tail pointer on disk, which is cached in memory so that it can be examined without accessing the disk, is current, the tail pointer is updated so that it remains current after b1 has been deallocated to the tail. Otherwise, the tail pointer on disk is allowed to remain obsolete.

Updated tail pointers are periodically checkpointed, that is, written, to disk in box 1820. For example, the system may checkpoint after every n transactions, where n is a system parameter. Alternatively, the system may checkpoint after p updates to the tail following the last time the tail pointer on disk was updated, where p is a system parameter. Checkpoints are generally performed before the system is turned off during normal operation.

The cost for updating the tail pointer on disk can thus be amortized across several allocations and/or deallocations. The embodiment can be used in conjunction with the above described methods, such as, for example, the methods described with reference to figures 8 and 9 or memory management methods I, II, and III. If used in conjunction with memory management methods II and III, checkpointing of the tail can be combined with checkpointing of free list(s). For example, suppose that an MFLF system needs checkpointing of the tail pointer and free list pointers. The tail pointer on disk can be stored adjacent to the free list pointers. That way, the tail pointer and free lists can be checkpointed using a single block write or a small number of writes with little disk head movement.

If a system failure occurs, the tail pointer stored on disk may not be current. Box 1815 attempts to correct the tail pointer after a failure. Let t be the stored value of the tail pointer. The system examines bytes which would be code bytes in a header corresponding to a block beginning at t. If these code bytes indicate that t corresponds to a block, the block size s is determined from the header. The tail pointer is incremented to t+s and the process continues until code bytes are examined that indicate that the storage does not correspond to a block. The updated tail pointer is then stored on disk.

In one illustrative example, suppose that memory management method II is being used. Both the size and pointer headers could be used as code bytes. In box 1815, the test for valid code bytes could include verifying that the size bytes store a legal size and the pointer points to a block belonging to an appropriate size class. Figure 18 implements a probabilistic recovery algorithm. It is possible that the tail pointer will be advanced unnecessarily in box 1815. By appropriate use of code bytes, this probability can be made arbitrarily low. In the worst case, some tail storage may be lost, but allocated storage will not be mistakenly deallocated.

It is possible to use the method of figure 18 in conjunction with several different DSA's which use tail-like data structures, such as MFLF algorithms. It is not always necessary to use box 1825 to deallocate blocks to the tail. For example, an MFLF algorithm may not normally try to add a recently freed block to the tail. Instead, the MFLF algorithm may add the freed block to a free list. Storage could be added to the tail during coalescing.

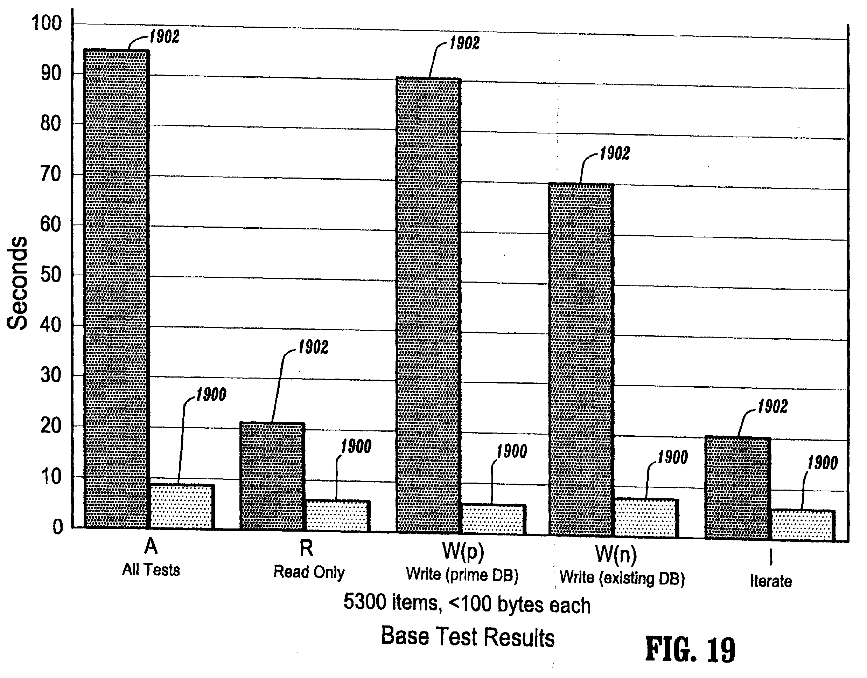

Referring to figure 19, MFLF III, using memory management method I was tested against DB2™, which is available commercially from IBM, for performance characteristics. Read and write operations were performed for 5300 items each under 100 bytes in size. Timings reported include initialisation times. The test-run included:
- (A) Run all tests in one execution including simple functional tests;
- (R) Read each item once (keyed lookup) from the database;
- (Wp) Write each item once to empty database (prime the base);
- (Wn) Write each item once to full database (replace each item in primed database); and
- (I) Run iteration (non-keyed lookup) over each item in the database.

It should be noted that because of the initialisation times plus the extra functional testing for test A that (R+Wp+Wn+I) does not add up to A. The database included one table with an indexed primary key (string) and a data object (LOB). Base tests commit updates only after all updates are complete. Results for supplemental updates committed after every update or every 5^{th} update are shown in figure 19. Actual application of the test to DB2 needed to commit every 5 updates, and several tuning parameters were needed for DB2 to complete the tests. The base test results are shown in figure 19. Test times in seconds show surprising improvements, labeled 1900, over DB2, labeled 1902. In most cases an order of magnitude improvement was obtained.

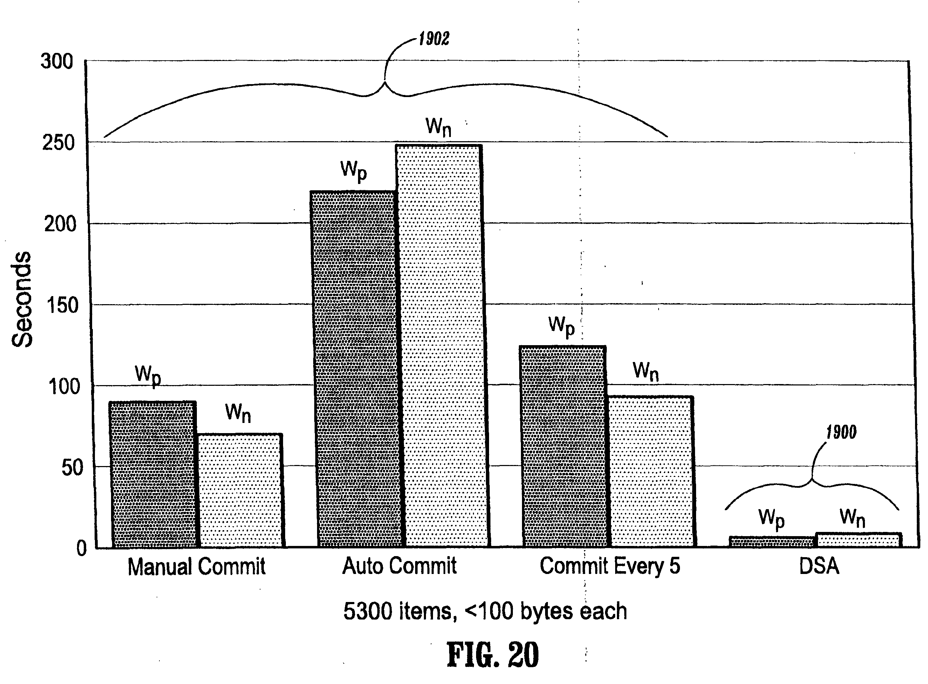

Referring to figure 20, DB2 was run in several modes. For example, application of the test to DB2 was performed in a manual commit, automatic commit and commit every 5 updates, as shown in figure 20. The operation times (in seconds) for the Wp and Wn tests was greater than an order of magnitude and in some cases greater than two orders of magnitude.

There are a number of variations to the embodiments which may be made by one skilled in the art. For example, the DSA's may be parallelised to handle multiple transactions concurrently. This may be appropriate for use with a disk array. Techniques for achieving parallelism are described in the following references:
1) "Dynamic Storage Allocation on a Multiprocessor", Arun Iyengar, Massachusetts Institute of Technology Laboratory for Computer Science TR-560 (PhD Thesis), December 1992; and
2) "Scalability of Dynamic Storage Allocation Algorithms", Arun Iyengar, in Proceedings of IEEE Frontiers '96, October 1996, which are incorporated herein for all purposes.

Having described preferred embodiments of a system and method for persistent and robust storage allocation (which are intended to be illustrative and not limiting), it is noted that modifications and variations can be made by persons skilled in the art in light of the above teachings. It is therefore to be understood that changes may be made in the particular embodiments of the invention disclosed which are within the scope of the invention as outlined by the appended claims.

## Claims

1. A method for managing computer memory comprising the steps of:
maintaining multiple sets of free blocks of memory wherein free blocks are added to sets of blocks based on the size of the free blocks;
searching, in response to a request for a free block of a requested size exceeding a first threshold, a set for a free block which is at least as large as the requested size but smaller than the requested size plus a second threshold; and
allocating the free block in its entirety, if the free block is found.

2. A method as claimed in claim 1, wherein the step of maintaining multiple sets of free blocks comprises maintaining the multiple sets of free blocks on a disk.

3. A method as claimed in either of claims 1 and 2, wherein the step of maintaining multiple sets of free blocks comprises maintaining the multiple sets of free blocks in a main memory.

4. A method as claimed in any preceding claim, further comprising the steps of:
if the free block is not found but at least one block at least as large as the requested size is found, splitting the at least one block at least as large as the requested size to produce a second block; and
satisfying the request with the second block resulting from the splitting step.

5. A method as claimed in claim 4, wherein the at least one block being split is a smallest found block larger than the requested size.

6. A method as claimed in any preceding claim, wherein the multiple sets of free blocks include a set of largest blocks and the first threshold is larger than or equal to a smallest permitted block size for the set of largest blocks and further comprising the step of searching the set of largest blocks to satisfy the request.

7. A method as claimed in any preceding claim, wherein the step of searching comprises searching a set of free blocks which includes a list, the list including memory block allocation information for the set.

8. A method as claimed in any preceding claim, further comprising the step of dynamically adjusting at least one of the first and the second thresholds to vary a performance measure.

9. A method as claimed in any preceding claim, further comprising the step of deallocating an allocated block to a new set of free blocks based on the size of the allocated block.

10. A method as claimed in any preceding claim, further comprising the steps of:
maintaining a contiguous block of memory;
selecting the set of free blocks based on the requested size;
in response to the set of free blocks being non-empty, allocating at least part of a first block located in the set; and
in response to the set being empty, satisfying the request from the contiguous block of memory.

11. A method as claimed in claim 10, further comprising the steps of:
maintaining a pointer for a first pointer location within the contiguous block of memory;
in response to a request for storage of a given size, incrementing the pointer by the given size to point to a second pointer location; and
satisfying the request using at least a part of the contiguous block beginning at the first pointer location.

12. A method as claimed in any preceding claim, including the step of managing a block of contiguous persistent memory comprising the steps of:
maintaining a first pointer in a main memory for determining a first free byte in a first block of memory;
maintaining headers in the persistent memory for a plurality of blocks wherein the headers include at least one code byte; and
allocating a second block from the first block by setting the at least one code byte for the second block to indicate that the second block is no longer part of the first block and updating the first pointer in the main memory.

13. A method as claimed in claim 12, further comprising the step of adding a block (b) to the first block, the step adding comprising the steps of:
modifying a code byte corresponding to b to indicate that b is part of the first block; and
updating the first pointer in the main memory.

14. A method as claimed in claim 13, wherein the at least one code byte serves other functions in addition to indicating that the second block is no longer part of the first block.

15. A method as claimed in claim 14, further comprising the step of periodically updating a second pointer in the persistent memory based on the value of the first pointer in the main memory.

16. A method as claimed in claim 15, further comprising the step of, in response to a system failure, updating the first and second pointers by examining the at least one code byte.

17. A method as claimed in claim 16, wherein the headers are initialised using a single block write.

18. A method as claimed in any preceding claim, further comprising the steps of:
maintaining a header for each block indicating a size and an allocation status of the block;
coalescing the free blocks by examining header information to combine adjacent free blocks; and
periodically storing information in the persistent storage indicating a level of coalescing achieved.

19. A method as claimed in claim 18, further comprising the steps of:
in response to a system failure during a coalescing operation, reading information in the persistent storage to determine the level of coalescing achieved before the system failure; and
resuming coalescing at a point based on the information in the persistent storage.

20. A method for managing persistent storage in a memory storage system comprising a main memory and at least one disk memory device comprising the steps of:
maintaining headers in persistent storage for a plurality of blocks wherein a header for each block includes a block size and an allocation status of the block;
maintaining at least one data structure in main memory for allocating and deallocating persistent storage;
allocating a first free storage block using a method as claimed in any preceding claim;
modifying the at least one data structure in the main memory and assigning an allocation status for the block in the persistent memory;
deallocating a second free storage block by assigning an allocation status in the persistent memory for the second free storage block; and
modifying the at least one data structure in the main memory.

21. A method as claimed in claim 20, further comprising the step of determining the at least one data structure in the main memory after a system restart from a plurality of headers in the persistent storage.

22. A method as claimed in claim 21, wherein the step of determining the at least one data structure in the main memory after the system restart includes at least one disk access of the persistent memory in which a single disk access reads in a plurality of bytes.

23. A method as claimed in any of claims 20 to 22, further comprising the steps of:
outputting information from the at least one data structure in the main memory to the persistent storage before a system shutdown; and
determining the at least one data structure in the main memory after a system restart from the outputted information.

24. A method as claimed in any of claims 20 to 23, wherein the step of maintaining headers in persistent storage includes providing multiple headers which are stored in a contiguous area in the persistent storage.

25. A method as claimed in any of claims 20 to 24, wherein the step of maintaining headers in persistent storage includes maintaining a header having a pointer field which points to a location in the persistent storage.

26. A method as claimed in claim 25, further comprising the steps of:
maintaining a list of blocks in the persistent storage using pointer fields in the headers; and
maintaining at least one current pointer in the main memory to a head of the list of blocks.

27. A method as claimed in claim 26, further comprising the steps of:
creating a new block in the persistent storage;
setting a pointer field in the persistent storage for the new block to a value of the at least one current pointer, p, in the main memory; and
setting, p, to the new block.

28. A method as claimed in claim 27, wherein a header for the new block is initialised using a single block write.

29. A method as claimed in any of claims 26 to 28, further comprising the step of:
periodically updating at least one head in persistent storage corresponding to the list from the at least one current pointer in the main memory.

30. A method as claimed in any of claims 26 to 29, wherein the list comprises a plurality of lists and the lists including headers corresponding to the plurality of lists which are maintained contiguously in the persistent storage, and further comprising the step of updating the headers in a single block write.

31. A method as claimed in any of claims 20 to 30, wherein the first free block and the second free storage block form part of the same block.

32. A method as claimed in any of claims 20 to 31, further comprising, in response to a failure, the step of examining the list of blocks to remove allocated blocks.

33. A method as claimed in claim 32, further comprising the step of terminating the examining step when a free storage block on the list of blocks is found.

34. A method as claimed in any preceding claim, comprising the steps of establishing a pointer field for the second free storage block and updating the pointer field by setting a pointer in the pointer field to a head of at least one list, L, of storage blocks in the main memory and the step of deallocating further includes the step of adding the second free storage block to the head of L in the main memory.

35. A method as claimed in any of claims 20 to 34, wherein a header for the second free block is updated using a single block write.

36. A method for managing memory in a persistent storage system comprising the steps of:
maintaining at least one data structure in a main memory for allocating and deallocating persistent storage blocks;
allocating and deallocating the persistent storage blocks entirely using a method as claimed in any preceding claims from the at least one data structure without accessing or writing to the persistent storage;
periodically checkpointing storage allocation information to the persistent storage; and
determining the at least one data structure in main memory after a restart from the checkpointed information.

37. A method for managing memory in a persistent storage system comprising the steps of:
maintaining at least one data structure in a main memory for allocating and deallocating persistent storage;
allocating and deallocating the persistent storage blocks entirely using a method as claimed in any preceding claim from the at least one data structure without accessing or writing to persistent storage;
outputting information from the at least one data structure in the main memory to persistent storage before a system shutdown; and
determining the at least one data structure in the main memory after a system restart from said outputted information.

38. A system for implementing a method as claimed in any preceding claim.

39. A computer program product including a storage medium having stored thereon computer program code means for implementing a system or method as claimed in any preceding claim.
